# EUROPEAN PATENT APPLICATION

(11) **EP 1 275 953 A2**
(43) Date of publication of application: **15.01.2003**
(21) Application number: 02014575.1
(22) Date of filing: 01.07.2002
(51) Int. Cl.: G01M 15/00

(54) **Phase recognition system for an internal combustion engine**

(30) Priority: 11.07.2001 LU 90801
(71) Applicant: Delphi Technologies, Inc., Troy, MI 48007 (US)
(72) Inventor: De Voogd, Adrianus, 8818 Grevels (LU)
(74) Representative: Beissel, Jean

(57) **Abstract**

A phase recognition device for an internal combustion engine with a crankshaft comprising a transmitter disc (10) comprising incremental angular marking means and a sensor associated with the transmitter disc for generating a sensor signal representative of the passage of the incremental angular marking means in front of the sensor. The transmitter disc (10) rotates at half the speed of the crankshaft. The incremental angular marking means comprises at least two series of a multiplicity of incremental angular marks (12, 14), which extend over complementary angular portions of the transmitter disc (10), each series of a multiplicity of incremental angular marks (12, 14) causing the sensor to generate a distinct sensor signal.

## Description

### FIELD OF THE INVENTION

The present invention generally relates to a phase recognition device for an internal combustion engine.

### BACKGROUND OF THE INVENTION

In a four-stroke internal combustion engine with a crankshaft and at least one camshaft, injection timing and spark timing are calculated by the engine control unit from the respective positions of the camshaft and crankshaft. As described in WO00/19077, the angular position of the crankshaft is generally determined by means of a crankshaft sensor, which scans a transmitter disc with a specific surface coupled to the crankshaft. Such a transmitter disc typically has a multiplicity of incremental angular marks as well as one reference mark. The sensor generates a signal representative of the passage of the incremental angular marks in front of it.

Since the crankshaft makes two revolutions during one operating cycle of a four-stroke engine, the phase of the cycle cannot be uniquely determined with the crankshaft sensor. It is therefore common to determine the angular position of the camshaft by means of a so-called phase sensor. The phase sensor scans a transmitter disc with a single mark, the transmitter disc being coupled to the camshaft. Since the camshaft only makes one revolution per engine cycle, the combination of the crankshaft and camshaft sensor signals allows an unequivocal recognition of a phase within the cycle.

### OBJECT OF THE INVENTION

The object of the invention is to provide a simpler phase recognition means. This object is solved by a phase recognition device as claimed in claim 1.

### SUMMARY OF THE INVENTION

According to the present invention, a phase recognition device for an internal combustion engine with a crankshaft is proposed. The device includes a transmitter disc comprising incremental angular marking means. A sensor is associated with the transmitter disc and generates a sensor signal representative of the passage of the incremental angular marking means. According to an important aspect of the invention, the transmitter disc is coupled to the crankshaft in such a way as to rotate at half crankshaft speed. According to a further important aspect of the invention, the incremental angular marking means comprises at least two series of a multiplicity of incremental angular marks, which extend over complementary angular portions of the transmitter disc. Each series of incremental angular marks causes the sensor to generate a distinct sensor signal.

It shall be appreciated that the present device permits to unequivocally recognise two crankshaft positions within a cycle of a four-stroke engine. Indeed, the transmitter disc rotates at half the speed of the crankshaft and thus makes one revolution per cycle. Since each series of incremental angular marks causes the generation of a unique sensor signal, the transition between two different signals can be used to recognise a particular event in the engine's cycle. Hence, when the transmitter disc has two series of incremental angular marks―which cause the generation of two distinct signals―and since an engine generally only rotates in one direction, two events of the cycle can be recognised: a first event at the transition between the first and the second signal, and a second event at the transition between the second and the first signal. It shall further be appreciated that, since the transmitter disc is coupled to the crankshaft, the multiplicity of incremental angular marks provided on the transmitter disc allows a precise determination of the angular position of the crankshaft.

In practice, the present phase recognition device will generally be used for the phase recognition of cylinder-1, and the phases of the other cylinders will be derived therefrom.

The present device thus proves to be a simple and reliable phase recognition means. It is particularly advantageous over conventional systems using camshaft and crankshaft sensors, since one transmitter disc and one sensor can be saved. This also means savings in wiring harness, connectors and engine control module input. Moreover, a reduced number of components and electrical connections potentially increases the reliability of the device.

In order to recognise identical positions of the crankshaft in different phases of the cycle, the different series of angular marks should preferably extend over equal angular portions. For symmetry reasons and simplicity of implementation, each series of angular marks should preferably comprise the same number of angular marks.

In order to recognise two identical crankshaft positions corresponding to two different phases of the engine cycle, the transmitter disc is advantageously provided with a first series of a multiplicity of incremental angular marks, which extends over 180° on the transmitter disc and which causes the generation of a first sensor signal. The transmitter disc further comprises a second series of a multiplicity of incremental angular marks, which extends over the other 180° on the transmitter disc and which causes the generation of a second sensor signal, different from the first sensor signal. Such a transmitter disc thus allows to recognise a crankshaft position of e.g. 18° before top-dead-center of cylinder-1 corresponding to the compression stroke from the same position in the exhaust stroke.

The interaction between the sensor and the transmitter disc allowing the detection of the incremental angular marks can e.g. be based on an electromagnetic principle or an optical principle.

Electromagnetic sensing technology is preferred, since it generally proves easier to implement. In a preferred embodiment, the sensor is an inductive sensor and the transmitter disc is made of a ferromagnetic material. In the case of two series of incremental angular marks extending each over 180°, the first series of a multiplicity of incremental angular marks is preferably formed by an alternance of teeth and tooth intervals. The second series of a multiplicity of incremental angular marks is also formed by an alternance of teeth and tooth intervals. The teeth of the second series however have a shorter angular length than the teeth of the first series, and the tooth intervals of the second series have a longer angular length than the tooth intervals of the first series.

### BRIEF DESCRIPTION OF THE DRAWING

The present invention will now be described, by way of example, with reference to the accompanying drawing, in which:

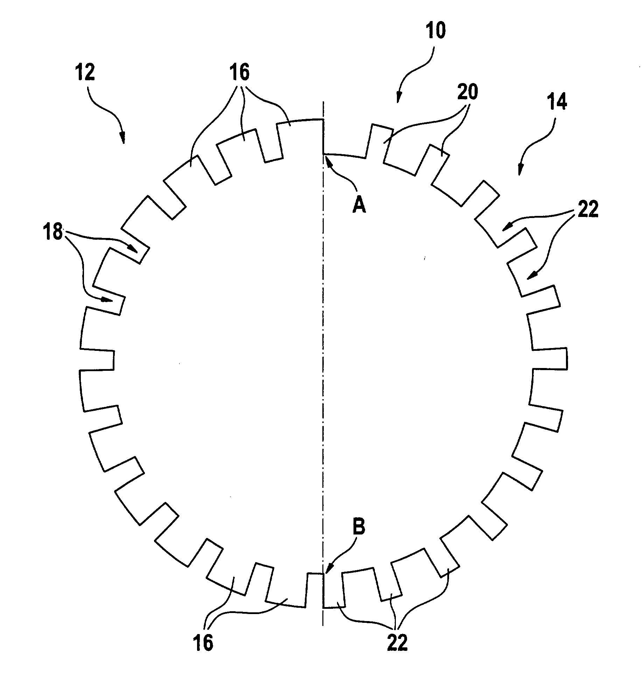

FIG. 1: is a sketch of a transmitter disc to be used in a preferred embodiment of a phase recognition device in accordance with the invention.

### DETAILED DESCRIPTION OF A PREFERRED EMBODIMENT

In a preferred embodiment, a phase recognition device in accordance with the invention comprises the transmitter disc 10 shown in Fig.1 and a sensor (not shown). Such a device allows an unequivocal phase identification within a cycle of a four-stroke internal combustion engine.

It will be appreciated that in the present phase recognition device, the transmitter disc 10 is coupled to the crankshaft in such a way as to rotate at half crankshaft speed. Hence, the transmitter disc 10 makes one revolution per engine cycle.

As can be seen in Fig.1, the transmitter disc 10 has a specific toothed surface, which forms an incremental marking means. In the present embodiment, the transmitter disc 10 is made from a ferromagnetic material and the sensor is an inductive sensor. Hence, when the transmitter disc 10 rotates, the passage of the toothed disc surface in front of the sensor induces a voltage in the sensor coil, which is proportional to the temporal variation of the magnetic flux. The generated sensor signal is transformed in the engine control module into a rectangular signal representative of the transmitter disc surface.

It will further be appreciated that the incremental angular marking means on the transmitter disc 10 comprises two series of a multiplicity of incremental angular marks, respectively generally indicated 12 and 14, which are designed in such a way as to cause the generation of distinct sensor signals.

The first series 12 extends over 180° on the transmitter disc 10. It comprises a multiplicity of teeth 16 and tooth intervals 18, alternately arranged.

The second series 14 extends over the other 180° on the transmitter disc 10, i.e. the complementary angular portion of the transmitter disc 10. It comprises a multiplicity of teeth 20 and tooth intervals 22, alternately arranged. The teeth 20 of the second series 14 have a shorter angular length than the teeth 16 of the first series 12 and the tooth intervals 22 of the second series 14 have a longer angular length than the tooth intervals 18 of the first series 12.

Hence, the second series of incremental angular marks 14 will induce a second signal in the sensor, which is different from the first signal induced by the first series of incremental angular marks 12.

It is to be noted that such a transmitter disc 10 allows to unequivocally identify two identical angular positions of the crankshaft within one engine cycle, based on the transitions between the two series of angular marks 12 and 14. In Fig.1, the transition points between the two series are indicated A and B.

Since the transmitter disc 10 makes one revolution per cycle, each series of incremental angular marks 12 and 14 will make one passage in front of the sensor per cycle. Hence, transition points A and B will each pass once per cycle in front of sensor. This means there are two transitions of the sensor signal per cycle, which provide relevant indications to recognise two events in the cycle.

In the present embodiment, the transition points A and B are spaced by 180°, and their passage in front of the sensor will happen at two identical crankshaft positions, which are dephased by 360° and thus correspond to two different phases of the cycle. However, supposing that the disc rotates in the clockwise direction, the passage of transition point A in front of the sensor will be indicated by a transition from the first signal to the second signal. The passage of transition point B in front of the sensor will by indicated by a transition from the second signal to the signal first signal. The signal transitions thus provide an indication of an angular position of the crankshaft, but also of the phase of the cycle.

For example, the present device allows to recognise a crankshaft position of 18° before top-dead-center of cylinder-1 corresponding to the compression stroke from the same crankshaft position in the exhaust stroke.

For symmetry and simplicity reasons, each series should preferably include the same number of teeth, the dimensions of the teeth and tooth intervals in each series being the same. Moreover, the dimensions of the teeth and tooth intervals should be determined in such a way as to allow a reliable recognition of each series of incremental angular marks. It will be understood that the precision of the determination of the angular position of the crankshaft depends on the number of angular marks. The greater the number of teeth, the greater the precision.

A good compromise between these different aspects is e.g. obtained by a transmitter disc having a first series of marks that comprises sixty teeth having an angular length of about two degrees and tooth intervals having an angular length of about one degree. The second series comprises sixty teeth having an angular length of about one degree and tooth intervals having an angular length of about two degrees.

## Claims

1. A phase recognition device for an internal combustion engine with a crankshaft comprising:
a transmitter disc (10) comprising incremental angular marking means;
a sensor associated with said transmitter disc (10) for generating a sensor signal representative of the passage of said incremental angular marking means in front of said sensor;
**characterised in that**
said transmitter disc (10) rotates at half the speed of said crankshaft; and
said incremental angular marking means comprises at least two series of a multiplicity of incremental angular marks (12, 14), which extend over complementary angular portions of said transmitter disc (10), each series of a multiplicity of incremental angular marks (12, 14) causing the sensor to generate a distinct sensor signal.

2. The phase recognition device according to claim 1, **characterised in that** within each series (12, 14) the incremental angular marks are identical.

3. The phase recognition device according to claim 1 or 2, **characterised by** an equal number of incremental angular marks in each series (12, 14).

4. The phase recognition device according to claim any one of the preceding claims, **characterised by**
a first series of a multiplicity of incremental angular marks (12), which extend over 180° on said transmitter disc (10) and which cause said sensor to generate a first sensor signal; and
a second series of a multiplicity of incremental angular marks (14), which extend over the other 180° on said transmitter disc (10) and which cause said sensor to generate a second sensor signal different from said first sensor signal.

5. The phase recognition device according to any one of the preceding claims, **characterised in that** said transmitter disc is made of ferromagnetic material and said sensor is an inductive sensor or a Hall-effect sensor.

6. The phase recognition device according to claim 4 and 5, **characterised in that**
said first series of a multiplicity of incremental angular marks (12) is formed by an alternance of teeth (16) and tooth intervals (18), and
said second series of a multiplicity of incremental angular marks (14) is formed by an alternance of teeth (20) and tooth intervals (22), said teeth (20) of said second series (14) having a shorter angular length than said teeth (16) of said first series (12) and said tooth intervals (22) of said second series (14) having a longer angular length than said tooth intervals (18) of said first series (12).

7. The phase recognition device according to any one of claims 1 to 4, **characterised in that** the detection of the passage of said incremental angular marking means in front of said sensor is based on an optic principle.
